# EUROPÄISCHE PATENTANMELDUNG

(11) **EP 1 125 834 A2**
(43) Veröffentlichungstag der Anmeldung: **22.08.2001**
(21) Anmeldenummer: 01103168.9
(22) Anmeldetag: 10.02.2001
(51) Int. Cl.: B62H 5/20

(54) **Sicherheitssystem für Strassenfahrzeuge sowie Strassenfahrzeug mit einem solchen System**

(30) Priorität: 18.02.2000 DE 20002985 U
(71) Anmelder: Wall, Richard, Beverly Hills, California 90210 (US); Seifman, Kurt, 10024 New York (US)
(72) Erfinder: Wall, Richard, Beverly Hills, California 90210 (US); Seifman, Kurt, 10024 New York (US)
(74) Vertreter: Graf, Helmut, Dipl.-Ing.

(57) **Zusammenfassung**

Die Erfindung bezieht sich auf ein neuartiges Sicherheitssystem für Straßenfahrzeuge und ist gekennzeichnet durch einen im Fahrzeug untergebrachten Datensafe (5) mit einer Aufnahme (7) für wenigstens einen Datenträger (8) für persönliche Daten des Fahrzeugbenutzers.

## Beschreibung

Die Erfindung bezieht sich auf ein Sicherheitssystem gemäß Oberbegriff Patentanspruch 1 sowie auf Straßenfahrzeug gemäß Oberbegriff Patentanspruch 9.

Bei Unfällen ist es vielfach lebenswichtig wichtig, daß Unfallhelfer sehr schnell und zuverlässig Informationen über die Unfallopfer erhalten, um wirksame Hilfe leisten zu können.

Aufgabe der Erfindung ist es, die Sicherheit bei Fahrzeugen in dieser Hinsicht zu verbessern. Zur Lösung dieser Aufgabe ist ein Fahrzeug entsprechend dem Patentanspruch 1 ausgebildet.

Das erfindungsgemäße Sicherheitssystem für Straßenfahrzeuge ermöglicht eine schnelle Bereitstellung von lebensrettenden Daten, die für eine wirksame Unfallhilfe notwendig sind. Diese Daten sind z.B. Blutgruppe, Unverträglichkeiten und Allergien, besonderen Krankheiten usw..

Weiterbildungen der Erfindung sind Gegenstand der Unteransprüche. Die Erfindung wird im folgenden anhand der Figuren an Ausführungsbeispielen näher erläutert. Es zeigen:
- Fig. 1: in vergrößerter Teildarstellung ein Pkw-Cockpit, zusammen mit einem in einer Mittelkonsole untergebrachten Datensafe gemäß der Erfindung;
- Fig. 2: in Teildarstellung ein Motorrad, zusammen mit einem an einem Instrumenten-Tableau untergebrachten Datensafe.

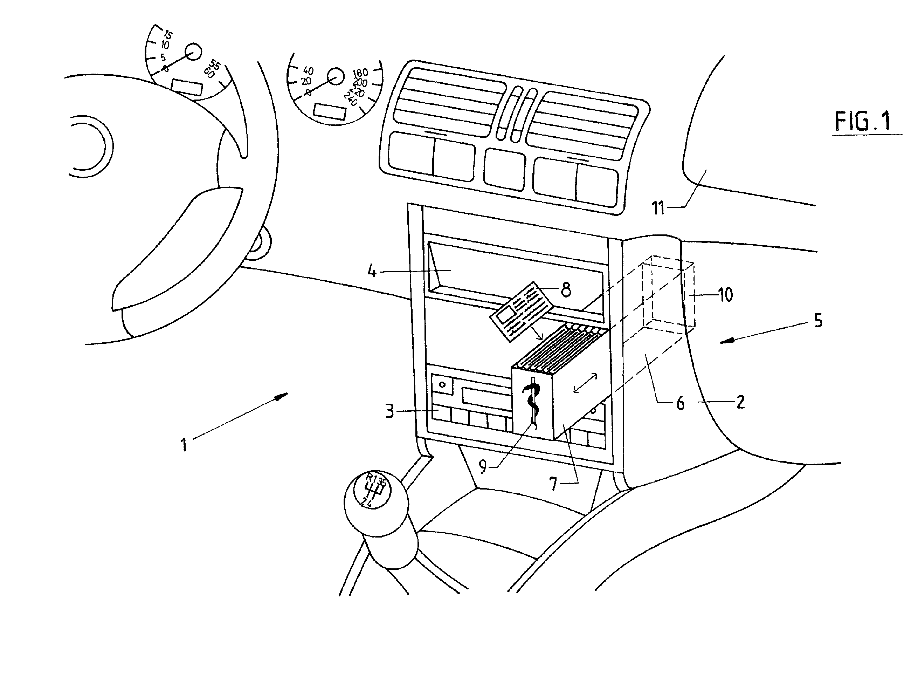

Die Figur 1 zeigt in vergrößerter Teildarstellung ein allgemein mit 1 bezeichnetes Cockpit eines Personenkraftwagens mit einer Mittelkonsole 2, an der üblicherweise unterschiedliche Funktionselemente, wie Radio 3, Aschenbecher 4 usw. vorgesehen sind.

In der Mittelkonsole 2 ist ein Datensafe 5 montiert, der bei der dargestellten Ausführungsform aus einem Gehäuse 6 und aus einer durch Einschieben in das Gehäuse 6 verschließbaren schubladenartigen Aufnahme 7 besteht. Das Gehäuse 6 und die Aufnahme 7 sind aus einem hochbelastbaren, insbesondere auch feuerfestem Material gefertigt, und zwar insbesondere auch in der Weise, daß der Safe 5 im geschlossenem Zustand, d.h. bei in das Gehäuse 6 eingeschobener Aufnahme 7 hohen äußeren Kräften widerstehen kann sowie auch feuer- und hitzebeständig ist, so daß in der Aufnahme 7 untergebrachte Datenträger 8 selbst bei einem schweren Unfall nicht zerstört werden.

Die Datenträger 8, von denen in die Aufnahme 7 mehrere untergebracht werden können, enthalten neben einem Bild (Paßbild) auch weitere lebensrettende Daten der den PKW normalerweise benutzenden Personen, wie z.B. Blutgruppe, Unverträglichkeiten, Allergien, besonderen Krankheiten usw..

Die Daten sind z.B. in Schriftform auf den kartenartigen Datenträgern 8 aufgebracht und/oder maschinenlesbar, beispielsweise in Form eines Chips oder einer Magnetspur oder in einer anderen maschinenlesbaren Form auf den Datenträgern 8 abgelegt.

Normalerweise befindet sich der Safe 5 im geschlossenem Zustand und ist in diesem Zustand durch eine am Gehäuse 6 vorgesehene Verriegelungseinrichtung gehalten. Durch eine Entriegelung, die selbstverständlich an der an der Mittelkonsole 2 sichtbaren Vorderseite des Safes zugänglich ist, kann der Safe geöffnet werden. Der Safe 5 bzw. die Ablage 7 ist an der Vorderseite dieser Ablage augenfällig bei 9 gekennzeichnet, so daß im Falle eines Unfalls von Rettungsdiensten der Safe 5 schnell gefunden und geöffnet werden kann.

Im Inneren des Gehäuses 6 ist weiterhin eine Elektronik 10 vorgesehen, die z.B. von der Auslöseelektronik des Airbag 11 angesteuert wird und die im Falle eines Unfalls einen an der Vorderseite des Gehäuses 6 vorgesehenen, aber nicht dargestellten akustischen und/oder optischen Signalgeber ansteuert, der bei einem Unfall zum leichteren Auffinden des Safes 5 ein optisches und/oder akustisches Signal aussendet.

Die Elektronik 11 kann auch so ausgebildet sein, daß sie bei Aktivierung eine innere Verriegelung für die Aufnahme 7 freigibt, so daß diese Aufnahme 7 dann nach dem manuellen Entriegeln einer äußeren Verriegelung geöffnet werden kann, und zwar mit dem Vorteil, daß im Normalfall der Safe 5 verschlossen ist und auch von Unbefugten nicht geöffnet werden kann.

Grundsätzlich besteht auch die Möglichkeit, die Elektronik 10 so auszubilden, daß sie Teil eines Global Positioning Systems (GPS) sowie eines Senders ist und im Falle eines Unfalls, d.h. bei Aktivierung ein von Hilfsdiensten zu empfangendes Funksignal absetzt, welches zugleich auch eine genaue Angabe über die Position des Unfalls enthält.

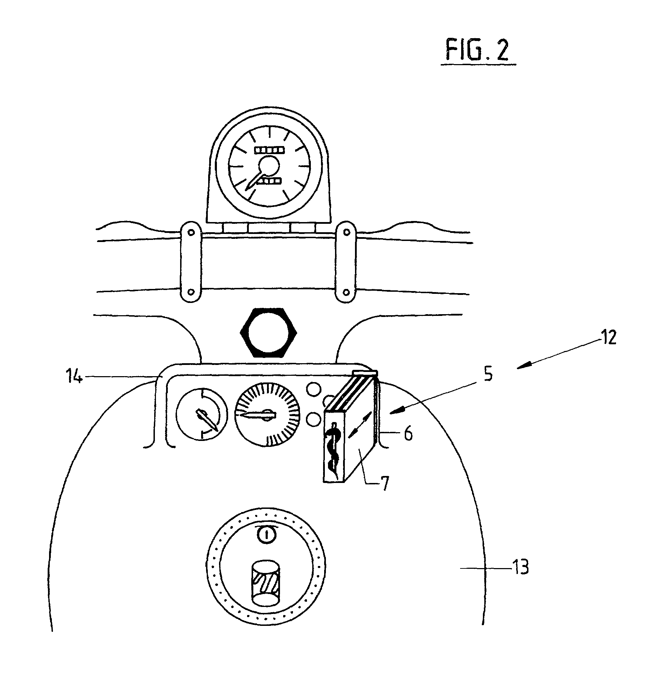

Die Figur 2 zeigt in Teildarstellung ein Motorrad 12, bei dem der Datensafe 5 im Bereich einer am Motorradtank 13 angeordneten Konsole 14 für Bedienungs- und Anzeigeinstrumente vorgesehen ist.

Die Erfindung wurde voranstehend an Ausführungsbeispielen beschrieben. Es versteht sich, daß zahlreiche Änderungen möglich sind, ohne daß dadurch der der Erfindung zugrundeliegende Erfindungsgedanke verlassen wird. So ist es beispielsweise auch möglich, den Datensafe 5 an anderen Positionen im Bereich des Fahrzeugs vorzusehen. Bevorzugt wird der Datensafe aber dort vorgesehen, wo erfahrungsgemäß bei Unfällen die geringsten Beschädigungen an einem Fahrzeug zu erwarten sind. Der Datensafe 5 kann bereits bei der Herstellung des Fahrzeugs in dem Rahmen bzw. in der Karosserie dieses Fahrzeugs an geeigneter Stelle geplant und fest vorgesehen sein. Grundsätzlich besteht aber auch die Möglichkeit, vorhandenes Fahrzeug mit dem Datensafe 5 nachzurüsten.

Vorstehend wurde davon ausgegangen, daß die Aktivierung der Elektronik 10 durch den Auslösemechanismus des Airbags 11 erfolgt. Anstelle hiervon oder zusätzlich hierzu besteht aber auch die Möglichkeit, für das Auslösen der Elektronik 10 einen zusätzlichen Sensor am Fahrzeug, beispielsweise auch am bzw. im Gehäuse 6 vorzusehen, der bei einer das übliche übersteigenden Beschleunigung in einer beliebigen Achsrichtung anspricht und dadurch die Elektronik 10 aktiviert.

### Bezugszeichenliste

- 1: Cockpit
- 2: Mittelkonsole
- 3: Radio
- 4: Aschenbecher
- 5: Datensafe
- 6: Gehäuse
- 7: Aufnahme
- 8: Datenträger
- 9: Safevorderseite
- 10: Elektronik
- 11: Airbag
- 12: Motorrad
- 13: Tank
- 14: Konsole

## Patentansprüche

1. Sicherheitssystem für Straßenfahrzeuge, gekennzeichnet durch einen im Fahrzeug (1, 12) untergebrachten Datensafe (5) mit einer Aufnahme (7) für wenigstens einen Datenträger (8) für persönliche Daten des Fahrzeugbenutzers.

2. Sicherheitssystem nach Anspruch 1, dadurch gekennzeichnet, daß der Datensafe (5) und/oder dessen Aufnahme (7) und/oder ein Gehäuse (6) dieses Safes hochbelastbar und/oder feuer- und hitzebeständig ausgebildet sind.

3. Sicherheitssystem nach Anspruch 1 oder 2, dadurch gekennzeichnet, daß der Datensafe (5) an seiner zum Öffenen bestimmten Vorderseite gekennzeichnet, vorzugsweise optisch gekennzeichnet ist.

4. Sicherheitssystem nach einem der vorhergehenden Ansprüche, gekennzeichnet durch eine Elektronik (10), die im Falle eines Unfalls wenigstens eine optische und/oder akustische Anzeigeeinrichtung zum Auffinden des Datensafes ansteuert.

5. Sicherheitssystem nach einem der vorhergehenden Ansprüche, dadurch gekennzeichnet, daß der wenigstens eine Datenträger die Form einer Karte, beispielsweise einer maschinell lesbaren Karte aufweist.

6. Sicherheitssystem nach einem der vorhergehenden Ansprüche, dadurch gekennzeichnet, daß die Elektronik (10) als Sender zum Aussenden eines Hilfssignals, vorzugsweise zusammen mit einem die Position bestimmenden Signal ausgebildet ist.

7. Sicherheitssystem nach einem der vorhergehenden Ansprüche, dadurch gekennzeichnet, daß der Datensafe (5) im Bereich der Fahrzeugmitte, beispielsweise im Bereich der Mittelkonsole (2) oder eines Fahrzeugtunnels angebracht ist.

8. Sicherheitssystem nach einem der vorhergehenden Ansprüche, dadurch gekennzeichnet, daß bei Ausbildung des Fahrzeugs als Motorrad der Datensafe im Rahmen und/oder im Bereich des Lenkers und/oder im Bereich einer unmittelbar hinter der Mitte des Lenkers vorgesehenen Konsole untergebracht ist.

9. Straßenfahrzeug, gekennzeichnet durch seine Ausstattung mit dem Sicherheitssystem nach einem der Ansprüche 1 - 8.
